(19) Europäisches Patentamt

European Patent Office

Office européen des brevets

(11) **EP 1 595 352 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(21) Anmeldenummer: **04706174.2**

(22) Anmeldetag: **29.01.2004**

(51) Int Cl.:
***H04J 14/02*** *(2006.01)*

(86) Internationale Anmeldenummer:
**PCT/EP2004/000807**

(87) Internationale Veröffentlichungsnummer:
**WO 2004/075450 (02.09.2004 Gazette 2004/36)**

(54) **VERFAHREN ZUR ERMITTLUNG DER NETZAUSLASTUNG IN EINEM TRANSPARENTEN OPTISCHEN ÜBERTRAGUNGSSYSTEM**

METHOD FOR DETERMINING THE NETWORK LOAD IN A TRANSPARENT OPTICAL TRANSMISSION SYSTEM

PROCEDE POUR DETERMINER LA CHARGE RESEAU DANS UN SYSTEME DE TRANSMISSION OPTIQUE TRANSPARENT

(84) Benannte Vertragsstaaten:
**DE ES FR GB IT**

(30) Priorität: **21.02.2003 DE 10307493**
**12.03.2003 DE 10310798**

(43) Veröffentlichungstag der Anmeldung:
**16.11.2005 Patentblatt 2005/46**

(73) Patentinhaber: **SIEMENS AKTIENGESELLSCHAFT**
**80333 München (DE)**

(72) Erfinder: **SCHLÜTER, Paul**
**81241 München (DE)**

(56) Entgegenhaltungen:
**US-A1- 2003 009 582**

- **ZANG H ET AL: "DYNAMIC LIGHTPATH ESTABLISHMENT IN WAVELENGTH-ROUTED WDM NETWORKS" IEEE COMMUNICATIONS MAGAZINE, IEEE SERVICE CENTER. PISCATAWAY, N.J, US, Bd. 39, Nr. 9, September 2001 (2001-09), Seiten 100-108, XP001107756 ISSN: 0163-6804 in der Anmeldung erwähnt**
- **BOUILLET E ET AL: "Monte Carlo Techniques for Design of Wavelength-Routed All-Optical Networks" GLOBECOM'99, Bd. 1B, 5. Dezember 1999 (1999-12-05), Seiten 549-552, XP010373613**
- **MAIER G ET AL: "A HEURISTIC APPROACH FOR THE DESIGN OF STATIC MULTIFIBER WDM NETWORKS: PRINCIPLES AND APPLICATIONS" OPTICAL NETWORKS MAGAZINE, SPIE, BELLINGHAM, WA, US, Bd. 3, Nr. 5, September 2002 (2002-09), Seiten 52-66, XP001161645 ISSN: 1388-6916**
- **LI G ET AL: "CONTROL PLANE DESIGN FOR RELIABLE OPTICAL NETWORKS" IEEE COMMUNICATIONS MAGAZINE, IEEE SERVICE CENTER. PISCATAWAY, N.J, US, Bd. 40, Nr. 2, Februar 2002 (2002-02), Seiten 90-96, XP001125423 ISSN: 0163-6804 in der Anmeldung erwähnt**

**Beschreibung**

Die Erfindung betrifft ein Verfahren zur Ermittlung der Netzauslastung in einem transparenten optischen Übertragungssystem mit einer Vielzahl von über optische Übertragungsstrecken miteinander verbundenen Netzknoten, in dem mehrere optische Verbindungspfade jeweils über mindestens eine, optische Übertragungskanäle aufweisende Übertragungsstreckevon einem ersten optischen Netzknoten zu einem zweiten optischen Netzknoten mit Hilfe von Signalisierungsnachrichten aufgebaut, aufrechterhalten und abgebaut werden.

Im Zuge des schnellen Wachstums des Internets ist der Bedarf an zur Verfügung stehender Übertragungsbandbreite in den letzten Jahren überproportional stark angestiegen. Fortschritte in der Entwicklung von optischen Übertragungssystemen, insbesondere auf der Wavelength Division Multiplexing (WDM) Technologie basierenden Übertragungssystemen, haben zur Realisierung von hohen Übertragungsbandbreiten beigetragen. Hierbei kommt eine besondere Bedeutung den transparenten optischen Übertragungssystemen zu, die eine vollständige Übertragung von Datensignalen im optischen Bereich, d.h. ohne opto-elektrische und elektro-optische Konversion der Datensignale, ermöglichen.

Transparente optische Übertragungssysteme sind aus mehreren über optische Übertragungsstrecken miteinander verbundene optischen Netzknoten aufgebaut. Hierbei werden optische Übertragungskanäle, insbesondere optische Wellenlängenkanäle, zur Übertragung der optischen Datensignale, insbesondere von optischen WDM-Signalen, vorgesehen. Die Betreiber von derartigen transparenten optischen Übertragungssystemen wünschen unter anderem eine Steigerung hinsichtlich der Anpassungsfähigkeit an sich dynamisch ändernde Verkehrsaufkommen bzw. Verkehrsanforderungen. Dafür werden in den optischen Netzknoten Schaltmatrizen vorgesehen, die ein flexibles Umschalten der optischen Datenströme bzw. optischen Datensignale auf der Basis einzelner Wellenlängen ermöglichen. Dies wird als dynamisches "Wellenlängen-Routing" bezeichnet. Durch eine Automatisierung dieses "Optical Channel Layers", d.h. das Vorsehen eines automatisch schaltbaren optischen Übertragungssystems ("Automatically Switched Transport Network" (ASTN)) werden im Fehlerfall die Wiederherstellungzeiten sowie die Verbindungsaufbauzeiten erheblich reduziert.

Die in derartigen ASTN's vorgesehenen optischen Netzknoten, sind überwiegend über optische Übertragungsstrecken, insbesondere WDM-Übertragungsstrecken, miteinander verbundenen. Im Falle das in den einzelnen optischen Netzknoten keine Wellenkonversionseinrichtungen vorgesehen sind, ist es erforderlich, daß zum Aufbau eines optischen Verbindungspfades zwischen einem ersten Netzknoten und einem mit diesem beispielsweise über mehrere weitere optische Netzknoten verbundenen zweiten Netzknoten auf den einzelnen optischen Übertragungsstrecken des Verbindungspfades jeweils derselbe optische Übertragungskanal, insbesondere Wellenlängenkanal, zur Verfügung steht. Bei bidirektionalen Verbindungspfaden ist die Bereitstellung von paarweise verfügbaren optischen Übertragungskanälen erforderlich.

Ein derartiges transparentes optisches Übertragungssystem ermöglicht den Aufbau von optischen Verbindungen zwischen zwei Teilnehmern, wobei jede optische Verbindung durch einen ausgewählten Verbindungspfad durch das transparente optische Übertragungssystem sowie einen festgelegten optischen Übertragungskanal gegeben ist. Für den Aufbau einer neuen optischen Verbindung ist somit zunächst ein optischer Verbindungspfad und ein auf diesem verfügbarer optischer Übertragungskanal, beispielsweise Wellenlängenkanal zu ermitteln. Dieses Problem ist in der Fachwelt als "dynamisches RWA" ("Routing and Wavelength Assignment") - Problem bekannt. Daneben gibt es noch ein "statisches RWA"-Problem, bei dem alle Verbindungsanforderungswünsche bereits simultan bekannt sind - siehe hierzu Zang et al. "Dynamic Lightpath Establishment in Wavelength-Routed WDM Networks", IEEE Communication Magazine, September 2001, Seiten 100 bis 108.

Beim eigentlichen Verbindungsaufbau werden die entsprechenden Wellenlängenkanäle auf allen Übertragungsstrecken des gesamten Verbindungspfades belegt und sind somit nicht mehr für den Aufbau von weiteren Verbindungspfaden verfügbar.

Zur Lösung des dynamischen RWA-Problems ist die Kenntnis der Belegung der Wellenlängenkanäle innerhalb des transparenten optischen Übertragungssystems erforderlich, so daß spätestens bei Bearbeitung einer Verbindungsanforderung ein Verbindungspfad mit noch freien Wellenlängenkanälen bestimmt werden kann. Die a-priori Kenntnis der Netzauslastung des transparenten optischen Übertragungssystems sollte dabei möglichst umfassend sein, um eine bessere und schnellere Lösung des dynamischen RWA-Problems zu ermöglichen sowie fehlerhafte Verbindungsaufbauversuche nahezu zu vermeiden. Hierfür ist von entscheidender Bedeutung die Ermittlung der Netzauslastung. Für die weiteren Betrachtungen wird angenommen, daß die Verbindungsanforderungen nicht von einer zentraler Netzmanagementeinheit bearbeitet werden, sondern das die Verbindungsanforderungen dezentral, d.h. beispielsweise in einem ersten Netzknoten, bearbeitet werden. Bei der dezentralen Bearbeitung ist im Gegensatz zum zentralen Ansatz die Belegung der Übertragungskanäle auf den Übertragungsstrecken des gesamten optischen Übertragungssystems nicht vollständig bekannt.

Zur Ermittlung und Auswertung von derartiger Netzauslastungsinformationen wurden bereits in einigen Veröffentlichungen unterschiedliche Verfahren vorgeschlagen, die im folgenden kurz dargelegt werden - siehe hierzu Zang et. al. "Dynamic Lightpath Establishements in Wavelength-Routed WDM Networks", IEEE Communications Magazine, Seiten 100 bis 108, September 2001 und Li et. al. "Control Plane for Design for Reliable Optical Networks", IEEE Communications Magazine, Seiten 90-96, Februar 2002.

### - Lokal verfügbare Belegungsinformation

Der Belegungszustand der einzelnen Wellenlängenkanäle auf den lokalen WDM-Übertragungsstrecken ist hierbei zu jedem Zeitpunkt bekannt, wobei hierbei unter einer lokaler Übertragungsstrecke eine Übertragungsstrecke zu verstehen ist, die unmittelbar an den einzelnen Netzknoten angeschlossen ist. Zusätzlich ist der Belegungszustand einiger nicht-lokaler Wellenlängenkanäle bekannt, und zwar derjenigen Wellenlängenkanäle, die von Verbindungen genutzt werden, an denen der jeweilige Netzknoten beteiligt ist. Nachteilig ist hierbei, daß die Belegung nur eines kleinen Teiles aller einzelnen Wellenlängenkanäle innerhalb des gesamten Übertragungssystems auf diese Weise bekannt wird. Insbesondere liegen keine Informationen über diejenigen nicht-lokalen Wellenlängenkanäle vor, die beispielsweise nicht belegt sind.

### - Belegung aller Wellenlängenkanäle

Die Belegung sämtlicher Wellenlängenkanäle kann mittels eines Routingprotokolls netzweit verteilt werden. Bei diesem Ansatz ist die letztlich verfügbare Information aber häufig nicht aktuell, d.h. falsch. Dies ist insbesondere auf den Zeitbedarf für die Aktualisierung der verwendeten Netzauslastungsinformationen zurückzuführen. Ferner können Änderungen des Belegungszustandes der einzelnen Wellenlängenkanäle sehr häufig sein, weshalb eine ständige Aktualisierung derartiger Belegungszustandsinformationen mit einem hohen Ressourcenaufwand (Übertragungs- und Rechenkapazität) verbunden sein kann. Dieser hohe Aufwand steht bisher in keinen Verhältnis zum erzielten Nutzen.

### - Kenntnis der Belegung der Wellenlängenkanäle entlang einer oder mehrerer potentieller Verbindungspfade

Wenn durch einen ersten Netzknoten für eine Verbindungsanforderung zunächst ein potentieller Verbindungspfad bestimmt wird, dann können anschließend mit Hilfe von Signalisierungsnachrichten freie Wellenlängenkanäle für diesen Pfad ermittelt und insbesondere sogleich für diese Verbindungsanforderung reserviert werden. Nachteilig hierbei ist, daß dem den Verbindungaufbau initiierenden ersten Netzknoten für die Auswahl des Verbindungspfades nur eine geringe Anzahl an Netzauslastungsinformationen zur Verfügung steht. Entsprechend besteht die Gefahr, daß die Auswahl ungünstig ist oder daß für den selektierten Verbindungspfad kein gemeinsamer Wellenlängenkanal verfügbar ist - mit der Folge, daß ein weiterer Aufbau über einen anderen Verbindungspfad durchgeführt werden muß bzw. die Verbindungsanforderung abgelehnt werden muß.

Alternativ hierzu kann durch den ersten Netzknoten zum Aufbau einer Verbindung zunächst für mehrere potentielle Verbindungspfade der detaillierte Belegungszustand durch Anfrage bei den beteiligten Netzknoten ermittelt werden, um dann den geeignetsten Verbindungspfad auszuwählen. Hierbei kann eine Beschränkung auf die jeweils ersten k Übertragungsstrecken der unterschiedlichen Verbindungspfade erfolgen. Nachteilig ist hierbei, daß ein zusätzlicher Aufwand für die Ermittlung der Belegungszustände anfällt und die hierdurch gewonnenen Belegungszustandsinformationen nicht für weitere Verbindungsanforderung genutzt werden.

### - Zentrale Zuteilung der verfügbaren Bandbreiten

Durch ein Routingprotokoll werden die auf allen Übertragungsstrecken verfügbaren Übertragungsbandbreiten netzweit durch eine zentrale Steuereinheit zugeteilt. Eine Aktualisierung ist dabei nur sinnvoll, wenn vorgegebene Schwellenwerte über- oder unterschritten werden. Offensichtlich ist diese Information für die Lösung des dynamischen RWA-Problems nur bedingt brauchbar, da sie keine Aussagen über Wellenlängenkanäle macht.

Die Aufgabe der vorliegenden Erfindung ist insbesondere darin zu sehen, ein gegenüber dem dargelegten Stand der Technik verbessertes Verfahren zur Ermittlung der Netzauslastung in einem transparenten optischen Übertragungssystem anzugeben, bei dem Netzauslastungsinformationen netzweit und ohne einen hohen Signalisierungsaufwand ermittelt werden können.

Die Aufgabe wird ausgehend von den Merkmalen des Oberbegriffes des Patentanspruches 1 durch dessen kennzeichnende Merkmale gelöst.

Der wesentliche Vorteil der Erfindung ist darin zu sehen, daß in den Netzknoten pro Übertragungsstrecke für jeden optischen Übertragungskanal eine Belegungswahrscheinlichkeit ermittelt wird. Besonders vorteilhaft können mittels dieser ermittelten Belegungswahrscheinlichkeiten die Routing-Entscheidungen verbessert werden. Weiterhin wird hierdurch ohne zusätzlichen Ressourcenaufwand eine Ermittlung der aktuellen Netzauslastung sowie eine Abschätzung der zukünftigen Netzauslastung zu einem vorgegebenen Zeitpunkt bzgl. der einzelnen optischen Übertragungskanäle, d.h. insbesondere der Wellenlängenkanäle, innerhalb eines Netzknoten möglich.

EP 1 595 352 B1

Ein weiterer Vorteil der Erfindung liegt darin, daß in den jeweiligen Netzknoten die Belegungswahrscheinlichkeit eines optischen Übertragungskanals anhand von lokal verfügbaren Belegungszustandsinformationen und/oder anhand von von weiteren Netzknoten übermittelten Belegungszustandsinformationen ermittelt wird. Ferner werden die in den jeweiligen Netzknoten ermittelten Belegungszustandsinformationen für die lokal vorhandenen Übertragungskanäle mit Hilfe der über den optischen Netzknoten geführten Signalisierungsnachrichten und/oder Routingnachrichten an die weiteren optischen Netzknoten übertragen. Die einzelnen Netzknoten können somit diese netzweit vorliegenden Informationen in Ihre Routingentscheidung mit einfließen lassen. Hierdurch wird der fehlerhaft Aufbau von Verbindungspfaden deutlich reduziert.

Vorteilhaft werden als Belegungszustandsinformationen der Belegungszustand der lokal vorhandenen optischen Übertragungskanäle und der jeweils zugehörige Erfassungszeitpunkt erfaßt. Hierdurch werden die aktuellen Netzauslastungsinformationen für sämtliche optischen Übertragungskanäle des transparenten optischen Übertragungssystems als Informationen der Art

```
"Übertragungskanal x war frei/belegt zur Zeit t"
```

in den einzelnen Netzknoten hinterlegt.

Weitere vorteilhafte Ausgestaltungen der Erfindung sind den weiteren Ansprüchen zu entnehmen.

Im folgenden werden Ausführungsbeispiele des erfindungsgemäßen Verfahrens anhand der beiliegenden Zeichnungen näher erläutert.

Hierbei zeigen:

Figur 1    beispielhaft eine schematische Darstellung eines transparenten optischen Übertragungssystems gemäß einem Ausführungsbeispiel der vorliegenden Erfindung;

Figur 2a    eine schematische Darstellung der Struktur eines einfachen Lichtwellenleiternetzes zur Erläuterung des Prinzips des "Link-State"-Protokolls;

Figur 2b    eine schematische Darstellung der Struktur des in Figur 2a gezeigten Lichtwellenleiternetzes nach Auftritt einer Störung;

Figur 3    in einer schematischen Darstellung einen Vergleich des tatsächlichen Belegungszustandes eines Lichtwellenleiternetzes mit den in einem Netzknoten A vorliegenden Informationen über den Belegungszustand des Lichtwellenleiternetzes unter Anwendung des erfindungsgemäßen Verfahrens.

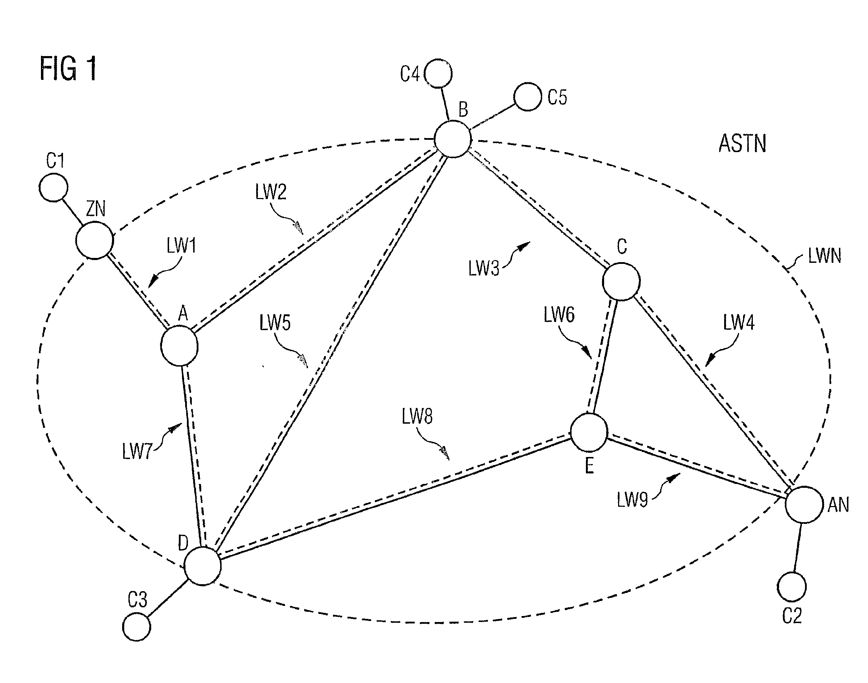

Figur 1 zeigt ein transparentes optisches Übertragungssystem ASTN (hier: ein automatisch vermittelndes Transportnetz bzw. ASTN (ASTN = automatically switched transport network)) gemäß einem ersten Ausführungsbeispiel der vorliegenden Erfindung. Dieses weist eine Vielzahl von über ein Lichtwellenleiternetz LWN (in der Darstellung gemäß Figur 1 durch eine strichlierte Linie veranschaulicht) miteinander verbundene Durchgangs-Netzknoten A, B, C, D, E, ZN, AN auf, sowie eine Vielzahl von Teilnehmeranschluß-Einrichtungen, insbesondere ClientEinrichtungen C1, C2, C3, C4, C5. Bei diesen kann es sich z.B. um weitere, clientseitig angeschlossene SDH-, ATM-, oder IP-Clienteinrichtungen handeln, z.B. um IP-Router (SDH = Synchrone Digitale Hierarchie, ATM = Asynchron Transfer Modus, IP = Internet Protocol). Die an die erste und zweite Teilnehmeranschluß-Einrichtungen C1, C2 angeschlossenen Durchgangs-Netzknoten ZN, AN stellen für den Aufbau einer Verbindung von der ersten zur zweiten Teilnehmeranschluß-Einrichtungen C1, C2 einen Zugangs-Netzknoten ZN und als Ausgangs-Netzknoten AN dar. Hierbei wird beispielsweise durch den als Zugangs-Netzknoten ZN fungierenden Netzknoten die zum Aufbau eines Verbindungspfades erforderliche Signalisierung initiiert.

Innerhalb des Lichtwellenleiternetzes LWN ist jeder Netzknoten ZN, AN, A, B, C, D, E über jeweils ein oder mehrere Lichtwellenleiterbündel LW oder über einen oder mehrere einzelne Lichtwellenleiter LW1 bis LW9 mit jeweils einem oder mehreren weiteren Netzknoten ZN, AN, A, B, C, D, E verbunden.

Zur Datenübertragung innerhalb des Lichtwellenleiternetzes LWN bzw. des transparenten optischen Übertragungssystems ASTN kann z.B. ein WDM-Datenübertragungsverfahren verwendet werden (WDM = Wavelength Division Multiplex bzw. Wellenlängen-Multiplex). Aufgrund der Wellenlängenmultiplextechnologie können über jeden im transparenten optischen Übertragungssystem ASTN vorhandenen Lichtwellenleiter LW1 bis LW9 unter Nutzung jeweils verschiedener Wellenlängenbereiche gleichzeitig mehrere verschiedene, gepulste optische Binärsignale übertragen werden.

Zwischen dem jeweiligen Netzknoten ZN, AN, A, B, C, D, E wird jeweils ein erster optischer Übertragungskanal,

4

vorzugsweise Wellenlängenkanal, zum Übertragen von Nutzsignalen verwendet (in der Darstellung gemäß Figur 1 durch durchgezogene Linien veranschaulicht), und jeweils ein zweiter Übertragungskanal, vorzugsweise Wellenlängenkanal, zum Übertragen von Kontrollnachrichten, insbesondere von Signalisierungssignalen bzw. Routingnachrichten (in der Darstellung gemäß Figur 1 durch gestrichelte Linien veranschaulicht) vorgesehen.

In den Nutzsignalen werden die eigentlichen Nutzdaten, und in den Signalisiersignalen die Signalisierinformationen in codierter Form übertragen. Beim vorliegenden Ausführungsbeispiel werden die eigentlichen Nutzdaten und die Signalisierinformationen jeweils über verschiedene optische Übertragungskanäle ein- und desselben Lichtwellenleiters LW übertragen (z.B. mittels Wellenlängen- und/oder Zeitmultiplex voneinander getrennter Nutz- und Signalisierungskanäle). Bei alternativen Ausführungsbeispielen werden demgegenüber die Signalisierinformationen und die Nutzdaten jeweils über separate Lichtwellenleiter und/oder über separate Verbindungspfade übertragen. Ebenfalls denkbar ist eine Übertragung der Signalisierinformationen über ein separates Netz, z.B. ein elektrisches Übertragungsnetz.

Beim vorliegenden Ausführungsbeispiel wird beispielsweise ein "Link-State"-Protokoll eingesetzt, um zwischen den Netzknoten ZN, AN, A, B, C, D, E die Netzauslastungsinformationen auszutauschen.

"Link-State"-Protokolle beruhen auf einer "dezentralen Netzkarte". Jeder der Netzknoten ZN, AN, A, B, C, D, E weist eine (nicht dargestellte) Speichereinrichtung auf, in der ein Datensatz gespeichert ist, der die vollständige (topologische) Karte bzw. die Struktur des Lichtwellenleiternetzes LWN repräsentiert. Teil dieses Datensatzes sind beispielsweise auch Informationen über den Belegungszustand einzelner Wellenlängenkanäle auf den einzelnen Übertragungsstrecken 1, 2, 3, 4, 5, 6.

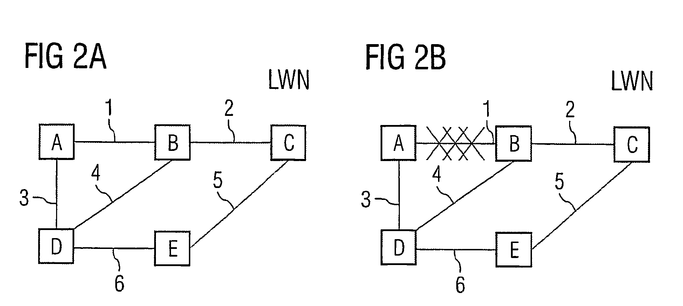

Im folgenden wird das Prinzip von "Link-State"-Protokollen anhand des in Figur 2a und 2b gezeigten, einfachen Lichtwellenleiternetzes LWN erläutert. Dieses weist beispielsweise fünf Netzknoten A, B, C, D, E auf, die über sechs Übertragungsstrecken 1, 2, 3, 4, 5, 6 miteinander verbunden sind.

Die Struktur des Datennetzwerks DNW kann gemäß Tabelle 1 z.B. durch folgenden, in sämtlichen Netzknoten A, B, C, D, E gespeicherten Datensatz repräsentiert werden:

Tabelle 1

| Q Verbindung von: | R Verbindung nach: | S Verbindung: | T Zustand: |
|---|---|---|---|
| A | B | 1 | 1 |
| A | D | 3 | 1 |
| B | A | 1 | 1 |
| B | C | 2 | 1 |
| B | D | 4 | 1 |
| C | B | 2 | 1 |
| C | E | 5 | 1 |
| D | A | 3 | 1 |
| D | E | 6 | 1 |
| D | B | 4 | 1 |
| E | C | 5 | 1 |
| E | D | 6 | 1 |

Dabei ist die erste Variable Q ("Verbindung von:") die Kennung desjenigen Netzknotens, von dem die jeweilige Übertragungstrecke ausgeht, die zweite Variable R ("Verbindung nach:") die Kennung desjenigen Netzknotens, zu dem die jeweilige Übertragungstrecke hinführt, und die dritte Variable S ("Verbindung") die Kennung der jeweiligen Übertragungstrecke. Die vierte Variable T ("Zustand") kennzeichnet den Belegungszustand der jeweiligen Übertragungstrecke.

Eine belegte Übertragungsstrecke kann z.B. mit Hilfe einer Zustands-Variablen T mit dem Wert "1" gekennzeichnet werden (vgl. die vierte Spalte der obigen Tabelle 1). Ist die Übertragungsstrecke nicht belegt, wird die Zustands-Variable T entsprechend angepasst (z.B. vom Wert "1" auf den Wert "0" oder "∞").

Da jedem Netzknoten A, B, C, D, E die vollständige Netzwerktopologie bekannt ist, kann beispielsweise jeder Knoten selbst den jeweils nicht belegten bzw. günstigsten Übertragungskanal bzw. Wellenlängenkanal zu einem (beliebigen) anderen Netzknoten A, B, C, D, E berechnen.

Figur 2b zeigt eine schematische Darstellung der Struktur des in Figur 2a gezeigten Lichtwellenleiternetzes LWN nach einer Änderung der Netzwerktopologie, hier: einer Unterbrechung auf der Übertragungsstrecke 1 zwischen dem Netzknoten A und dem Netzknoten B. Die Änderung des Zustands der entsprechenden Übertragungsstrecke 1 wird vom Netzknoten A und vom Netzknoten B erkannt. Der Netzknoten A und der Netzknoten B aktualisieren jeweils den bei ihnen gespeicherten Datensatz, und übermitteln den aktualisierten Datensatz an die übrigen Netzknoten C, D, E. Hierzu dient ein sog. "Flooding"-Protokoll. In einem Ausführungsbeispiel der Erfindung wird somit in jedem optischen Netzknoten A, B, C, D, E der Belegungszustand der optischen Übertragungskanäle, d.h. insbesondere der Wellenlängenkanäle auf den mit dem optischen Netzknoten verbundenen Übertragungsstrecken 1, 2, 3, 4, 5, 6 erfasst und zusammen mit dem jeweiligen Erfassungszeitpunkt $t_o$ mit Hilfe der über den optischen Netzknoten A, B, C, D, E geführten Signalisierungsnachrichten an die weiteren optischen Netzknoten A, B, C, D, E übertragen. In den einzelnen Netzknoten A, B, C, D, E werden diese Belegungszustandsinformationen im Datensatz gespeichert.

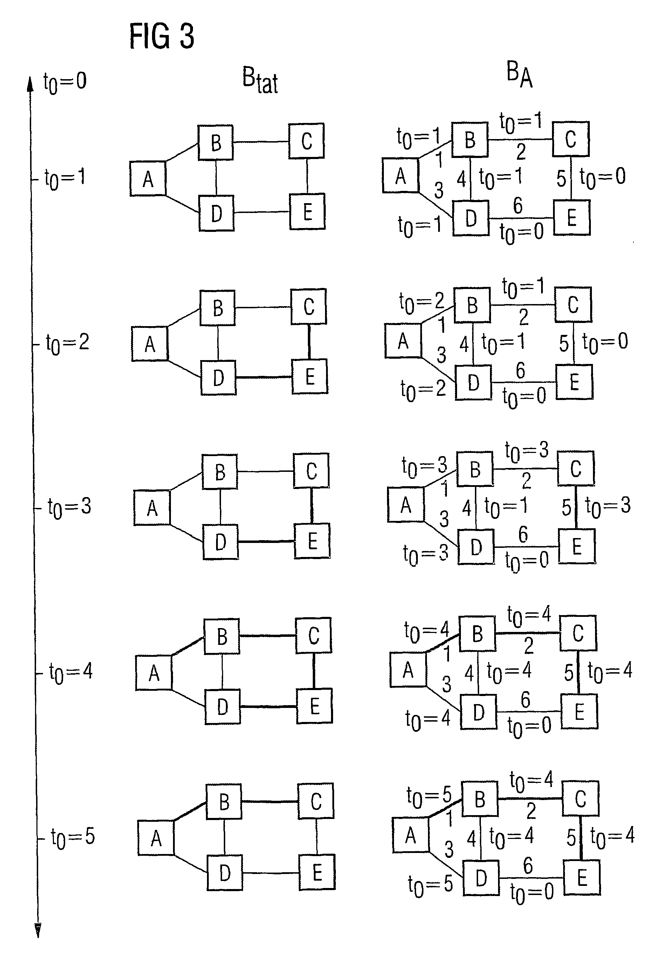

In Figur 3 ist beispielhaft in einer schematischen Darstellung ein Vergleich des tatsächlichen Belegungszustandes $B_{tat}$ eines Lichtwellenleiternetzes LWN mit den in einem Netzknoten A vorliegenden Informationen über den Belegungszustand $B_A$ des Datennetzwerks DNW dargestellt. In anderen Worten: die Netzauslastung aus Sicht des Netzknotens A wird mit der aktuellen Netzauslastung des gesamten optischen Lichtwellenleiternetzes LWN verglichen. Hierbei wird aus Gründen der Übersichtlichkeit beispielhaft ausschließlich der Belegungszustand eines optischen Übertragungskanals , d.h. insbesondere für eine einzelne Wellenlänge, betrachtet. Der Belegungszustand des Lichtwellenleiternetzes LWN wird hierbei zu fünf unterschiedlichen Zeitpunkten $t_o$=1 bis $t_o$=5 dargestellt, wobei in der die Sicht des Netzknoten A repräsentierenden Darstellungen des Lichtwellenleiternetzes LWN zu jeder der sechs Übertragungsstrecke 1, 2, 3, 4, 5, 6 jeweils der Erfassungszeitpunkt $t_o$ der Belegungszustandsinformation aufgeführt wird.

Zum Zeitpunkt $t_o$=0 wird das dargestellte Lichtwellenleiternetz LWN in Betrieb genommen, d.h. sämtliche zur Verfügung stehende Wellenlängenkanäle sind noch unbelegt (alle Übertragungsstrecken 1, 2, 3, 4, 5, 6 sind in Figur 3 als dünne Linie dargestellt). Anschließend werden bis zum Zeitpunkt $t_o$=1 beispielsweise anhand von Routingnachrichten die vorhandenen Belegungszustände der Übertragungskanäle auf den Übertragungsstrecken 1, 2, 3 , 4, 5, 6 netzweit bekannt gemacht. Da noch keine Verbindungspfade eingerichtet wurden, sind alle Belegungszustände des betrachteten Übertragungskanals auf den Übertragungsstrecken 1, 2, 3 , 4, 5, 6 korrekt erfaßt.

Zum Zeitpunkt $t_o$=2 wird innerhalb des Lichtwellenleiternetzes LWN ein optischer Verbindungspfad zwischen den Netzknoten D - E - C aufgebaut und aufrechterhalten. Die für diesen optischen Verbindungspfad erforderliche Belegung des Wellenlängenkanals auf der fünften und sechsten Übertragungsstrecke 5, 6 wird in Figur 3 durch dick gezeichnete Linien angedeutet. Da der Netzknoten A nicht Teil des Verbindungspfades D - E - C ist und somit die Signalisierungsnachrichten nicht über den Netzknoten A geführt werden, wird keine Aktualisierung der die fünfte und sechste Übertragungsstrecke 5, 6 betreffenden Netzauslastungsinformationen im Netzknoten A durchgeführt. Somit liegen im Netzknoten A zum Zeitpunkt $t_o$=2 keine den veränderten Belegungszustand widerspiegelnde Netzauslastungsinformationen vor. Die im Datensatz hinterlegten Netzauslastungsinformationen zu der fünften und sechsten Übertragungsstrecke 5, 6 weisen deshalb weiterhin den Erfassungszeitpunkt $t_o$=0 auf. Dagegen ist der Belegungszustand der beiden lokalen Übertragungsstrecken 1, 3 jederzeit bekannt, d.h. ihr Erfassungszeitpunkt $t_o$ ist somit $t_o$=2.

Zum Zeitpunkt $t_o$=3 werden durch den Netzknoten C anhand einer Routingnachricht der Belegungszustand der an den Netzknoten C angeschlossenen Übertragungsstrecken 2, 5 betreffende Informationen an die weiteren Netzknoten, insbesondere den Netzknoten A, übertragen. Die im Netzknoten A hinterlegten Netzauslastungsinformationen werden aktualisiert. Der Belegungszustand $B_A$ aus Sicht des Netzknoten A weist aufgrund des vorgeschlagenen Verfahrens zur Ermittlung der Netzauslastung zum Zeitpunkt $t_o$=3 eine deutlich höhere Übereinstimmung mit der tatsächlichen Belegungszustand $B_{tat}$. Bis auf einzelne Übertragungsstrecken 4, 6 sind sämtliche im Netzknoten A vorliegenden Netzauslastungsinformationen aktualisiert.

Im weiteren wird zum Zeitpunkt $t_o$=4 ein Verbindungpfad zwischen den Netzknoten A - B - C aufgebaut. Da der Netzknoten A Teil des Verbindungspfades ist, werden an ihn anhand der Signalisierungsnachrichten sämtliche aktuellen Belegungszustandsinformationen übertragen. Diese werden im Netzknoten A zur Aktualisierung des Datensatzes ausgewertet. Nach dieser Auswertung ergibt sich aus Sicht des Netzknotens A der in Figur 3 zum Zeitpunkt $t_o$=4 dargestellte Belegungszustand $B_A$. Die Sicht des Netzknotens A stimmt bis auf die Übertragungsstrecke 6 mit dem tatsächlichen Belegungszustand $B_{tat}$ überein. Somit wird durch die vorgeschlagene Verteilung der Belegungszustandsinformationen anhand der Signalisierungsnachrichten und/oder von Routingnachrichten praktisch ohne zusätzlichen Ressourcenaufwand eine deutlich Verbesserung der Netzauslastungsinformationen in den einzelnen Netzknoten erreicht.

Zum Zeitpunkt $t_o$=5 wird der Verbindungspfad D - E - C wieder abgebaut. Dieser Abbau wird jedoch aufgrund der fehlenden Beteiligung des Netzknotens A am Verbindungspfad aus Sicht des Netzknotens A nicht wahrgenommen. Daher gilt aus Sicht des Netzknotens A der über die Übertragungsstrecke 5 geführte Wellenlängenkanal weiterhin als belegt. Dies wird wiederum durch den der Übertragungsstrecke 5 in der Zeichnung zugeordneten Erfassungszeitpunkt $t_o$=4 und der dick gezeichneten Linie dargestellt.

Das Layout des übertragenen Datensatzes kann als statische Eigenschaft des Knotens durch Routingnachrichten netzweit verteilt werden. Für die Übermittlung dieser lokalen Belegungszustandsinformationen sind pro Übertragungsstrecke und Wellenlängenkanal beispielsweise nur jeweils 1 Bit erforderlich. Darüber hinaus ist eine Aktualisierung dieses Datensatzes nur dann erforderlich, wenn eine Verbindung mit Beteiligung des betrachteten Netzknotens A, B, C, D, E auf- oder abgebaut wird.

Grundlage des vorgeschlagenen Verfahrens zur Ermittlung der Netzauslastung ist die Abschätzung der Unsicherheit über die gegenwärtige Belegung eines Wellenlängenkanals anhand einer Belegungswahrscheinlichkeit. Somit wird nicht nur zwischen frei (OFF) und belegt (ON) unterschieden wird, sondern eine für zukünftige Zeitpunkte t ermittelbare Belegungswahrscheinlichkeit

$$p_{\mathrm{ON}}(t) = P\{\text{Kanal ist } \underline{\text{belegt}} \text{ zur Zeit } t\}$$

eingeführt. Die zeitliche Änderung dieser Belegungswahrscheinlichkeit kann unter Auswertung des Nutzerverhaltens abgeschätzt werden. Mittels dieser Belegungswahrscheinlichkeiten $p_{\mathrm{ON}}(t)$ können die Routing-Entscheidungen deutlich verbessert werden. Wenn der Belegungszustand eines Wellenlängenkanals bekannt ist, dann ergeben sich beispielsweise folgende Wahrscheinlichkeitswerte:

$P_{\mathrm{ON}}(t)=1$ (Wellenlängenkanal ist belegt) bzw.
$P_{\mathrm{ON}}(t)=0$ (Wellenlängenkanal ist frei).

Jeder einzelne Wellenlängenkanal wechselt zwischen zwei Zuständen: OFF (frei) und ON (belegt), wobei der Wechsel wesentlich durch das Nutzerverhalten bestimmt wird. Bei der Frei-Zeitdauer $T_{\mathrm{OFF}}$ und der Belegungs-Zeitdauer $T_{\mathrm{ON}}$ handelt es sich um zwei Zufallsvariablen, deren Verteilungsfunktion oder Kenngrößen wie Erwartungswert und Varianz durch Stichproben näherungsweise bestimmt werden. Diese werden per Routingnachrichten netzweit verteilt. Aktualisierungen werden beispielsweise in regelmäßigen Zeitabständen oder alternativ bei signifikanten Änderungen der Netzauslastung verschickt.

Mit Hilfe dieser übermittelten Informationen kann in den einzelnen Netzknoten A, B, C, D, E die Belegungswahrscheinlichkeit $P_{\mathrm{ON}}(t)$ für die jeweiligen optischen Übertragungskanäle, insbesondere die Wellenlängenkanäle, abgeschätzt werden.

Ohne im Netzknoten vorliegende Belegungszustandsinformationen ergibt sich für die jeweilige Belegungswahrscheinlichkeit eines Wellenlängenkanals folgendes:

$$p_{\mathrm{ON}}(\infty) = \frac{\langle T_{\mathrm{ON}} \rangle}{\langle T_{\mathrm{ON}} \rangle + \langle T_{\mathrm{OFF}} \rangle},$$

wobei $\langle ... \rangle$ für den Erwartungswert der jeweiligen Zufallsvariablen steht. Ist jedoch der Belegungszustand zu einem Erfassungszeitpunkt $t_o$ bekannt, dann ist eine Verbesserung der Schätzung für $P_{\mathrm{ON}}(t)$ möglich. Die Schätzung kann i.a. insbesondere auch dadurch zusätzlich verbessert werden, daß Informationen über die Dauer des aktuellen Belegungszustand zum Erfassungszeitpunkt $t_o$ in die Schätzung mit einfließen.

Eine gute Schätzung ist auch bereits dann schon möglich, wenn die erste Zufallsvariable Belegungs-Zeitdauer $T_{\mathrm{ON}}$ und die zweite Zufallsvariable Frei-Zeitdauer $T_{\mathrm{OFF}}$ ausschließlich durch die oben genannten netzweit verteilten Kenngrößen

- $P_{\mathrm{ON}}(\infty)$ (durchschnittliche Auslastung) und
- $\langle T_{\mathrm{ON}} \rangle$ (durchschnittliche Belegungs-Zeitdauer)

beschrieben werden.

Jeder Knoten innerhalb des transparenten optischen Übertragungssystems ASTN kennt diese beiden Kenngrößen $P_{\mathrm{ON}}(\infty)$, $\langle T_{\mathrm{ON}} \rangle$ für sämtliche Wellenlängenkanäle. Aus den einzelnen Mittelwerten für die durchschnittliche Belegungs-Zeitdauer $\langle T_{\mathrm{ON}} \rangle$ wird ein Gesamtmittelwert für die durchschnittliche Belegungs-Zeitdauer $\langle\langle T_{\mathrm{ON}} \rangle\rangle$ gebildet. Aus dem Gesamtmittelwert für die durchschnittliche Belegungs-Zeitdauer $\langle\langle T_{\mathrm{ON}} \rangle\rangle$ und der durchschnittlichen Auslastung $p_{\mathrm{ON}}(\infty)$ wird eine kanalindividuelle Belegungsrate $\kappa$ wie folgt gebildet:

$$\kappa = \frac{1}{\langle\langle T_{\mathrm{ON}} \rangle\rangle \cdot (1 - p_{\mathrm{ON}}(\infty))}$$

Diese kanalindividuelle Belegungsrate $\kappa$ fließt in die Schätzung für die aktuelle Belegungswahrscheinlichkeit $p_{\mathrm{ON}}(t)$ wie folgt mit ein:

$$p_{\mathrm{ON}}(t) = \begin{cases} p_{\mathrm{ON}}(\infty) + (1 - p_{\mathrm{ON}}(\infty)) \cdot \exp(-\kappa(t - t_0)) \\ p_{ON}(\infty) - p_{\mathrm{ON}}(\infty) \cdot \exp(-\kappa(t - t_0)) \end{cases} \quad \text{für} \quad \begin{cases} p_{ON}(t_0) = 1 \\ p_{\mathrm{ON}}(t_0) = 0 \end{cases}.$$

Mit Hilfe dieser Wahrscheinlichkeit werden gemäß dem vorgeschlagenen Verfahren die Belegungszustandsinformationen und somit die Netzauslastungsinformationen aus der Vergangenheit in die Gegenwart fortgeschrieben. Hierdurch wird es möglich, Belegungszustandsinformationen über die "vergangene" Belegung von Wellenlängenkanälen für zukünftige Routingentscheidungen zu nutzen. Der hierfür erforderliche zusätzliche Routingverkehrs ist verhältnismäßig gering, da nur zwei langsam veränderliche Kenngrößen (die durchschnittliche Auslastung $p_{\mathrm{ON}}(\infty)$ und die durch-schnittliche Belegungs-Zeitdauer $\langle T_{\mathrm{ON}} \rangle$) netzweit verteilt werden müssen. Gegenüber dem Ansatz stets alle Belegungszustandsänderungen netzweit zu verteilen, wird durch das vorgeschlagene Verfahren der Ressourcenaufwand deutlich reduziert bei verbesserter Kenntnis der Netzauslastung.

Hierbei wird die Belegung eines jeden Wellenlängenkanales anhand einer Belegungswahrscheinlichkeit $p_{\mathrm{ON}}$(t) ermittelt bzw. für eine Zeitpunkt $t_0$ angeschätzt. Die Belegungswahrscheinlichkeit $p_{\mathrm{ON}}$ (t) pro optischen Übertragungskanal ist exakt unter der Annahme, daß die Zufallsvariablen Belegungs-Zeitdauer und Frei-Zeitdauer exponentiell verteilt sind und jene von dem betrachteten optischen Übertragungskanal, insbesondere Wellenlängenkanal an sich unabhängig sind. Der hier verwendete Ansatz hat den Vorteil, daß aufgrund der Gedächtnislosigkeit der Exponentialverteilung nur der Belegungszustand zum Zeitpunkt $t_0$, nicht aber der zu früheren Zeitpunkten berücksichtigt werden muß.

Darüber hinaus ist das vorgeschlagene Verfahren dahingehend erweiterbar, daß nicht nur die durchschnittliche Auslastung $p_{\mathrm{on}}$ ($\infty$) und die durchschnittliche Belegungs-Zeitdauer $\langle T_{\mathrm{ON}} \rangle$ für sämtliche optischen Übertragungskanäle ermittelt, verteilt und ausgewertet werden, sondern auch die Korrelation zwischen den Belegungszuständen der optischen Übertragungskanäle innerhalb eines Netzknotens. Eine Korrelation besteht insbesondere dann, wenn über den betrachteten Netzknoten auch weitere Verbindungspfade aufgebaut werden.

Die Qualität der Schätzung kann insbesondere auch dadurch verbessert werden, daß zwar alle vergangenen Belegungszustände berücksichtigt werden, aber die erst kurz zurückliegenden Belegungszustände des jeweiligen optischen Übertragungskanals stärker gewichtet werden.

Das vorgestellte Verfahren zu Ermittlung der Netzauslastung innerhalb eine transparenten optischen Übertragungssystems ASTN ist sowohl beim Aufbau von gerichteten als auch von ungerichteten (bi-direktionalen) optischen Verbindungpfaden anwendbar.

**Patentansprüche**

1. Verfahren zur Ermittlung der Netzauslastung in einem transparenten optischen Übertragungssystem (ASTN) mit einer Vielzahl von über optische Übertragungsstrecken (1, 2, 3, 4, 5, 6) miteinander verbundenen Netzknoten (ZN, AN, A, B, C, D, E), in dem mehrere optische Verbindungspfade jeweils über mindestens eine, optische Übertragungskanäle aufweisende Übertragungsstrecke (1, 2, 3, 4, 5, 6) von einem ersten optischen Netzknoten (ZN) zu einem zweiten optischen Netzknoten (AN) mit Hilfe von Signalisierungsnachrichten aufgebaut, aufrechterhalten und abgebaut werden,
**dadurch gekennzeichnet,**
**dass** in den einzelnen Netzknoten (ZN, AN, A, B, C, D, E) pro Übertragungsstrecke (1, 2, 3, 4, 5, 6) jeweils die Belegungswahrscheinlichkeiten $p_{\mathrm{ON}}$ (t) der über die Übertragungsstrecke (1, 2, 3, 4, 5, 6) geführten optischen Übertragungskanäle durch Schätzung ermittelt werden.

2. Verfahren nach Anspruch 1,
**dadurch gekennzeichnet,**

**dass** in den jeweiligen Netzknoten (A) die Belegungswahrscheinlichkeit $P_{ON}(t)$ eines optischen Übertragungskanals anhand von lokal verfügbaren Netzauslastungsinformationen und/oder anhand von von weiteren Netzknoten (B,C, D,E) übermittelten Netzauslastungsinformationen ermittelt wird.

3. Verfahren nach Anspruch 1 oder 2,
   **dadurch gekennzeichnet,**
   **dass** in jedem optischen Netzknoten (A,B,C,D,E) die Netzauslastungsinformationen für die lokal vorhandenen optischen Übertragungskanäle ermittelt wird und diese mit Hilfe der über diesen optischen Netzknoten (A,B,C,D,E) geführten Signalisierungsnachrichten und/oder Routingnachrichten an die weiteren optischen Netzknoten (A,B,C, D,E) übertragen werden.

4. Verfahren nach Anspruch 2 oder 3,
   **dadurch gekennzeichnet,**
   **dass** als Netzauslastungsinformationen der Belegungszustand ON, OFF der lokal vorhandenen optischen Übertragungskanäle und der jeweils zugehörige Erfassungszeitpunkt ($t_o$) erfaßt werden.

5. Verfahren nach Anspruch 3 oder 4,
   **dadurch gekennzeichnet,**
   **dass** die lokal vorhanden optischen Übertragungskanäle eines optischen Netzknotens (A,B,C,D,E) auf den mit dem betrachteten Netzknoten (A,B,C,D,E) verbundenen Übertragungsstrecken (1,2,3,4,5,6) liegen.

6. Verfahren nach einem der Ansprüche 3 bis 5,
   **dadurch gekennzeichnet,**
   **dass** als Netzauslastungsinformationen die Kenngrößen der als erste Zufallsvariable ausgewerteten Belegungs-Zeitdauer $T_{ON}$ und der als zweite Zufallsvariable ausgewerteten Frei-Zeitdauer $T_{OFF}$ jedes lokal vorhandenen optischen Übertragungskanals in den jeweiligen Netzknoten (A,B,C,D,E) ermittelt werden.

7. Verfahren nach Anspruch 6,
   **dadurch gekennzeichnet,**
   **dass** als erste und zweite Kenngröße der Erwartungswert der ersten Zufallsvariable $\langle T_{ON} \rangle$ und die durchschnittliche Belegungswahrscheinlichkeit $P_{ON}(\infty)$ ermittelt werden.

8. Verfahren nach Anspruch 7,
   **dadurch gekennzeichnet,**
   **dass** aus der ersten und zweiten Kenngröße $\langle T_{ON} \rangle$, $P_{ON}(\infty)$ eines optischen Übertragungskanal eine kanalindivi-duelle Belegungsrate $\kappa$ ermittelt wird, die für die Abschätzung der zukünftigen Belegungswahrscheinlichkeit $p_{ON}(t)$ eines optischen Übertragungskanals ausgewertet wird.

9. Verfahren nach einem der Ansprüche 1 bis 8,
   **dadurch gekennzeichnet,**
   **dass** beim Aufbau von optischen Verbindungspfaden innerhalb des transparenten optischen Übertragungssystem (ASTN) pro Übertragungskanal die Belegungswahrscheinlichkeiten $P_{ON}(t)$ berücksichtigt werden.

**Claims**

1. Method for determining the network load in a transparent optical transmission system (ASTN) with a number of network nodes (ZN, AN, A, B, C, D, E) connected to each other via optical transmission links (1, 2, 3, 4, 5, 6), in which several optical connection paths are established, maintained and disconnected from a first optical network node (ZN) to a second optical network node (AN) by means of signalling messages via at least one transmission link (1, 2, 3, 4, 5, 6) that is provided with optical transmission channels,
   **characterised in that**
   **that** the occupancy probabilities $p_{ON}(t)$ of the optical transmission channels carried via the transmission link (1, 2, 3, 4, 5, 6) are determined by means of estimation in the individual network nodes (ZN, AN, A, B, C, D, E) for each transmission link (1, 2, 3, 4, 5, 6).

2. Method in accordance with claim 1,
   **characterised in that**

in the particular network nodes (A) the occupancy probability $P_{ON}(T)$ of an optical transmission channel is determined using locally available network load information and/or network load information transmitted from other network nodes (B, C, D, E).

3. Method in accordance with claim 1 or 2,
   **characterised in that**
   in each optical network node (A, B, C, D, E) the network load information for the locally available optical transmission channels is determined and transmitted to the other optical network nodes (A, B, C, D, E) using the signalling messages and/or routing messages carried via these optical network nodes (A, B, C, D, E).

4. Method in accordance with claim 2 or 3,
   **characterised in that**
   the occupancy status ON, OFF of the locally available optical transmission channels and the particular associated detection timepoint ($t_o$) are acquired as network load information.

5. Method in accordance with claim 3 or 4,
   **characterised in that**
   the locally available optical transmission channels of an optical network node (A, B, C, D, E) lie on the transmission links (1, 2, 3, 4, 5, 6) connected to the network nodes (A, B, C, D, E) under consideration.

6. Method in accordance with one of claims 3 to 5,
   **characterised in that**
   the characteristics of the occupancy time duration $T_{ON}$, evaluated as a first random variable, and of the free time duration $T_{OFF}$, evaluated as a second random variable, of each locally available optical transmission channel in the relevant network nodes (A, B, C, D, E) are determined as network load information.

7. Method in accordance with claim 6,
   **characterised in that**
   the expected value of the first random variable $<T_{ON}>$ and the average occupancy probability $P_{ON}(\infty)$ are determined as first and second characteristics.

8. Method in accordance with claim 7,
   **characterised in that**
   a channel-specific occupancy rate $\kappa$, that is evaluated for the estimation of the future occupancy probability $P_{ON}(t)$ of an optical transmission channel is determined from the first and second characteristics $<T_{ON}>$, $P_{ON}(\infty)$ of an optical transmission channel.

9. Method in accordance with one of claims 1 to 8,
   **characterised in that**
   the occupancy probabilities $P_{ON}(t)$ per transmission channel are taken into account when establishing optical connection paths within the transparent optical transmission system (ASTN).

**Revendications**

1. Procédé pour déterminer la charge réseau dans un système transparent de transmission optique (ASTN) avec une pluralité de noeuds de réseau (ZN, AN, A, B, C, D, E) interconnectés par des lignes de transmission optique (1, 2, 3, 4, 5, 6), dans lequel plusieurs chemins de liaison optique sont établis, maintenus et fermés à l'aide de messages de signalisation respectivement via au moins une ligne de transmission (1, 2, 3, 4, 5, 6) comportant des canaux de transmission optique et allant d'un premier noeud de réseau optique (ZN) vers un deuxième noeud de réseau optique (AN), **caractérisé en ce que**, dans les noeuds de réseau individuels (ZN, AN, A, B, C, D, E), pour chaque ligne de transmission (1, 2, 3, 4, 5, 6) respectivement, on détermine par estimation les probabilités d'occupation $P_{ON}(T)$ des canaux de transmission optique passant par la ligne de transmission (1, 2, 3, 4, 5, 6).

2. Procédé selon la revendication 1, **caractérisé en ce que**, dans les noeuds de réseau (A) respectifs, on détermine la probabilité d'occupation $p_{ON}(t)$ d'un canal de transmission optique à l'aide d'informations sur la charge réseau disponibles localement et/ou à l'aide d'informations sur la charge réseau transmises de la part d'autres noeuds de réseau (B, C, D, E).

**3.** Procédé selon la revendication 1 ou 2, **caractérisé en ce que**, dans chaque noeud de réseau optique (A, B, C, D, E), on détermine des informations sur la charge réseau pour les canaux de transmission optique présents localement et celles-ci sont transmises aux autres noeuds de réseau optiques (A, B, C, D, E) à l'aide des messages de signalisation et/ou messages de routage passant par ces noeuds de réseau optiques (A, B, C, D, E).

**4.** Procédé selon la revendication 2 ou 3, **caractérisé en ce que** sont saisis, en tant qu'informations sur la charge réseau, l'état d'occupation ON, OFF des canaux de transmission optique présents localement et l'instant de saisie ($t_o$) respectivement associé.

**5.** Procédé selon la revendication 3 ou 4, **caractérisé en ce que** les canaux de transmission optique d'un noeud de réseau optique (A, B, C, D, E) présents localement se trouvent sur les lignes de transmission (1, 2, 3, 4, 5, 6) reliées au noeud de réseau considéré (A, B, C, D, E).

**6.** Procédé selon l'une des revendications 3 à 5, **caractérisé en ce que** l'on détermine, en tant qu'informations sur la charge réseau, les grandeurs caractéristiques de la durée du temps d'occupation $T_{ON}$ évaluée en tant que première variable aléatoire et de la durée de temps libre $T_{OFF}$, évaluée en tant que deuxième variable aléatoire de chaque canal de transmission optique présent localement, dans les noeuds de réseau respectifs (A, B, C, D, E).

**7.** Procédé selon la revendication 6, **caractérisé en ce que** l'on détermine, en tant que première et deuxième grandeurs caractéristiques, la valeur attendue de la première variable aléatoire $\langle T_{ON} \rangle$ et la probabilité moyenne d'occupation $P_{ON}(\infty)$.

**8.** Procédé selon la revendication 7, **caractérisé en ce que** l'on détermine, à partir des première et deuxième grandeurs caractéristiques $\langle T_{ON} \rangle$, $p_{oN}(\infty)$ d'un canal de transmission optique, un taux d'occupation $\kappa$ individuel à chaque canal, lequel est évalué pour l'estimation de la probabilité future d'occupation $P_{ON}(t)$ d'un canal de transmission optique.

**9.** Procédé selon l'une des revendications 1 à 8, **caractérisé en ce que**, lors de l'établissement de chemins de liaison optique au sein du système transparent de transmission optique (ASTN), il est tenu compte des probabilités d'occupation $P_{ON}(T)$ pour chaque canal de transmission.

FIG 1

LWN

ASTN

C5

C4

C1

ZN

C3

C2

A

B

C

D

E

AN

LW1

LW2

LW3

LW4

LW5

LW6

LW7

LW8

LW9

## FIG 2A

LWN

## FIG 2B

LWN

# FIG 3